# EUROPEAN PATENT SPECIFICATION

(11) **EP 1 785 223 B1**
(45) Date of publication and mention of the grant of the patent: **06.01.2010**
(21) Application number: 06023320.2
(22) Date of filing: 09.11.2006
(51) Int. Cl.: B23Q 3/10

(54) **Workpiece supporting apparatus**
Werkstückstützvorrichtung
Dispositif de support d'une pièce

(30) Priority: 10.11.2005 IT MO20050297
(43) Date of publication of application: 16.05.2007
(73) Proprietor: SCM Group S.p.A., 47900 Rimini (IT)
(72) Inventor: Spazzoli, Andrea, 47814 Bellaria (RN) (IT)
(74) Representative: Crugnola, Pietro

(56) References cited:
- GB-A- 1 217 741
- US-A- 3 174 746
- US-A- 3 606 300
- US-A- 4 828 240

## Description

The invention relates to a supporting apparatus arranged for supporting a workpiece to be machined, according to the preamble of claim 1 (see, for example, US-4, 828, 240-A).

In particular, the invention relates to a supporting apparatus associable with a trimming machine designed for trimming an edge previously applied to a workpiece made of wood or similar materials.

An edge, to be trimmed in a suitable manner, must in fact be kept raised with respect to a work surface in such a way as to be able to interact with suitable trimming tools, for example milling cutters provided with shaped plates, with which the trimming machine is provided.

Known trimming machines comprise a work surface on which there is fixed a supporting apparatus arranged for supporting during trimming a workpiece provided with an edge that it is desired to trim.

Supporting apparatuses are known comprising templates reproducing the profile of a workpiece to be machined.

These templates reproduce on a reduced scale the workpiece to be machined in such a way as to support the latter and to enable only the edge to interact with the trimming tools.

A drawback of known apparatuses is that for each workpiece to be machined it is necessary to procure a corresponding template.

This involves a significantly greater financial burden that is due to the costs to be borne for making the aforesaid templates.

A further drawback is that it is necessary to be provided with a storage unit for storing the templates, with consequent further increase of costs. Still a further drawback is that the templates can have significant total dimensions and thus be difficult to move.

Another drawback is the time required for manufacturing the aforesaid templates, which templates may also be difficult to make if the workpiece has a particularly complex profile. Still another drawback is that if the templates are not made correctly, if, for example, they are too small, the workpiece is not supported correctly and can easily tilt during trimming, jeopardising the final quality of the machining.

Further supporting apparatuses are known comprising a plurality of circular spacer cylinders positionable in holes obtained in the work surface.

A drawback of the aforesaid apparatuses is that the rest ensured by the cylinders is limited to the diameter of the latter.

This means that extensive zones may exist that are not covered by the arrangement of the cylinders, with the consequent possibility that the workpiece may tilt during trimming inasmuch as it is poorly supported, compromising machining.

On the other hand, an attempt was made to overcome this drawback by providing a greater number of holes in the work surface and thus of cylinders.

This is a great drawback as a greater number of cylinders requires an increase in costs to make the holes and to purchase the cylinders and an increase in the time necessary for tooling the work surface.

GB1217741 discloses reusable constructional elements for use in constructing jigs, work-holders or like fixtures, such as a drilling jig or a milling fixture. Each of such constructional elements comprises a block which has a first aperture group formed of counterbored screwed bores, and a second aperture group formed of plain bores, extending perpendicular to the first group, the apertures of at least one of the groups being modularly spaced. The blocks can be joined by tension pins, dowels, bolts, screws, nuts, washers, studs, tee nuts, springs, and wing nuts, in combination with each other, or in combination with tommy bars, eyebolts, jacking screws, or hand nuts.

US4828240 relates to an apparatus for securing a workpiece having at least two internal holes to a table of a machine tool. Such an apparatus comprises a base plate including means defining an array of perpendicular rows of threaded holes and precision bores having parallel axes and forming an X-Y grid pattern, a set of first and second locating pins for the holes within the workpiece and a set of first and second block members supporting the locating pins.

US3174746 discloses a fixture for fixing workpieces on a work table of a numerically controlled machine tool. Such a fixture comprising a body member having a plurality of openings and a plurality of workpiece locating members. The latter have a mounting portion for fitting in any of the openings and a workpiece engaging portion for engaging the workpiece.

US3606300 relates to a device for fixing a workpiece to a pallet. Such a device comprises a housing having a screwed part for screwing into a fixing hole in a plate member fixable to a pallet. The housing contains a spring loaded screw to be screwed into a tapped hole in the workpiece.

An object of the invention is to improve the supporting apparatuses associable with a machine tool and arranged for supporting a workpiece to be machined.

A further object is to obtain supporting apparatuses that are inexpensive and are easy to make.

A still further object is to make supporting apparatuses that require shorter tooling time than known apparatuses.

Owing to the invention which is defined in claim 1, it is possible to obtain a supporting apparatus that provides better support to a workpiece to be machined. In fact, it is possible to orientate the elongated elements during the positioning thereof on the work surface in such a way that the latter faithfully reproduce a perimeter zone of a shape of the workpiece to be machined, with consequent improvement of the supporting action during machining. Further, owing to the elongated shape of the supporting means, it is possible to obtain an effective support with a smaller number of elements with respect to known apparatuses comprising cylinders.

This reduces costs and machine tooling time, with consequent further economic benefits.

Further, the elongated elements are compact and do not therefore require a large space intended for storing them and are easy to transport.

Further, the elongated elements are easy to make and are not expensive.

The invention can be better understood and implemented with reference to the attached drawings that illustrate an embodiment thereof by way of non limiting example, in which:
Figure 1 is a plan view of a supporting apparatus associated with a machine tool in a first operating configuration;
Figure 2 is a plan view of a supporting apparatus associated with a machine tool in a second operating configuration;
Figure 3 is a schematic side and partially sectioned view of a supporting element of the apparatus in Figure 1;
Figure 4 is a plan view of Figure 3.

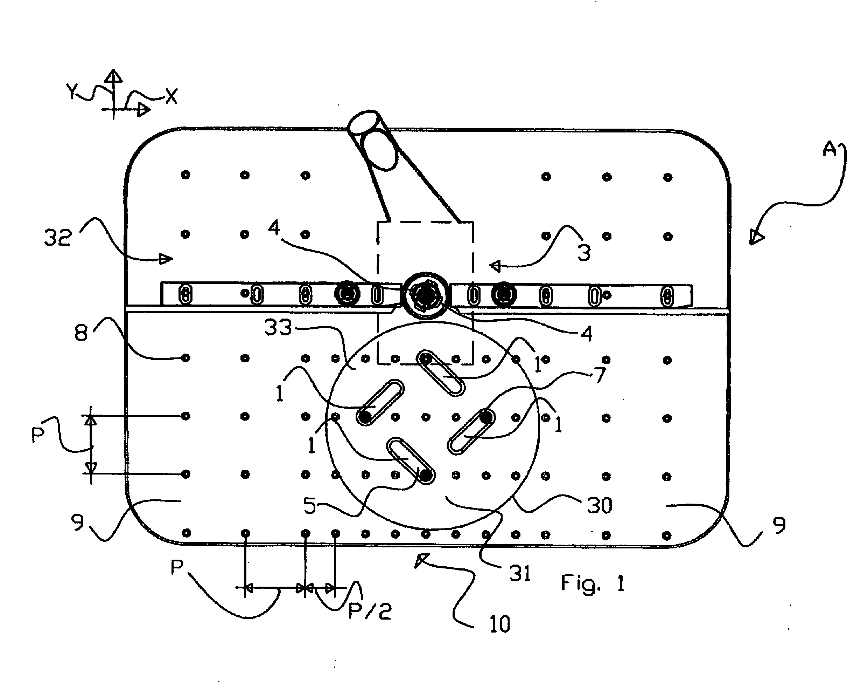

With reference to Figure 1, there is shown a supporting apparatus 1 in a first operating configuration A, in which it is arranged for supporting a workpiece 31 made of wood or similar materials.

The supporting apparatus 1 is associable with a work surface 2 of a trimming machine 3 arranged for trimming an edge 30 previously applied to the workpiece 31.

In an embodiment of the invention, which is not shown, the supporting apparatus 1 is associable with an edgebanding machine arranged for placing the edge 30 on said workpiece 31.

The supporting apparatus 1 is arranged for supporting the workpiece 31 during trimming, maintaining it raised with respect to the work surface 2, in such a way as to enable the edge 30 to interact with trimming tools, for example milling cutters 4 provided with shaped plates with which the trimming machine 3 is provided.

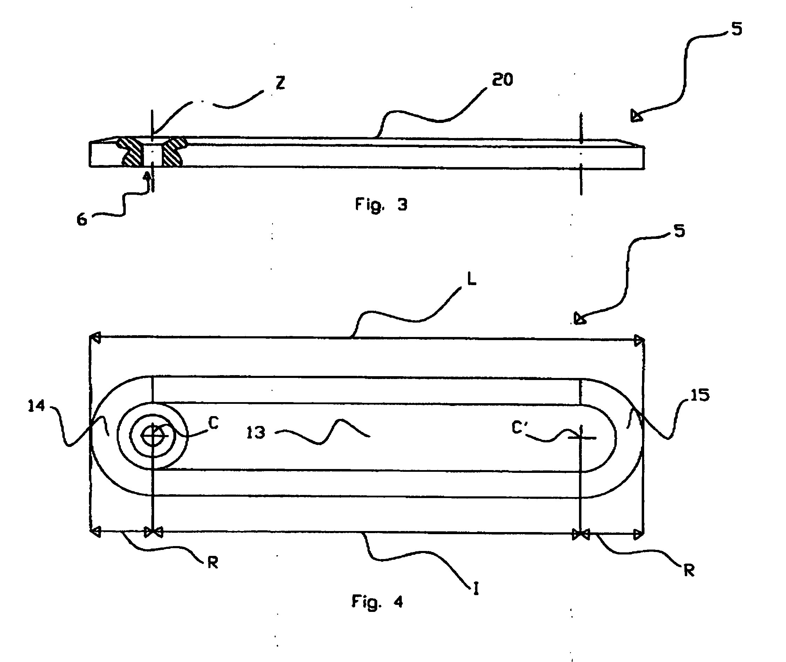

The supporting apparatus 1 comprises a plurality of elongated elements 5 (Figures 3 and 4).

The elongated elements 5 each comprise an end 14 and a further end 15, opposite the end 14, the end 14 and the further end 15 being connected by a central portion 13.

The central portion 13 is substantially rectilinear, and has a length I, whilst the first end 14 and the second end 15 are rounded and substantially have the shape of a half circle respectively having a centre at a point C and at a further point C' and a radius R, the length I being a distance between the point C and the further point C'.

In this way, a total length L of each elongated element 5 is defined that is equal to the length I and twice the radius R.

The elongated elements 5 are further provided with a through hole 6 obtained in the end 14, and extending around a rotation axis Z, passing through the point C and substantially perpendicular to a surface 20 with which each elongated element 5 is provided.

In an embodiment of the invention, which is not shown, the elongated elements 5 are provided with a further through hole obtained in the further end 15.

The elongated elements 5 are arranged for being fixed in respective holes 8 (Figure 1) obtained in the work surface 2 through threaded elements 7, for example countersunk head screws.

The holes 8 are positioned on the work surface 2 according to a preset pattern, for example a grid shape 32.

The grid 32 is defined by a plurality of straight lines that are mutually parallel to a direction X and by a further plurality of straight lines that are mutually parallel to a further direction Y that is transverse to the aforesaid direction X.

The work surface 2 has a substantially rectangular plan shape and extends along the direction X and along the further direction Y.

The work surface 2 comprises a peripheral portion 9 positioned laterally with respect to the milling cutters 4 and a central portion 10 facing the latter.

As mentioned previously, the work surface 2 is provided with a plurality of holes 8 to enable more versatile positioning of the elongated elements 5.

In particular, the holes 8 obtained in the peripheral portion 9 are distanced from one another by a value P measured along the direction X and along the further direction Y.

In order to ensure a more effective support during the trimming steps, the holes 8 obtained in the central portion 10 are on the other hand nearer one another.

In particular, the holes 8 of the central portion 10 are distanced from one another by the value P along the further direction Y, whilst they are distanced from one another by a value P/2 along the direction X.

In other words, the holes 8 become longitudinally closer to one another near the milling cutters 4, in such a way as to increase a number of elongated elements 5 that are positionable in the central portion 10, enabling more accurate positioning and improving the support where the workpiece 31 is more stressed.

In an embodiment of the invention, the holes 8 of the central portion 10 are mutually distanced by the value P/2 along the further direction Y, whilst they are mutually distanced by the value P along the direction X.

In another embodiment of the invention, the holes 8 of the central portion 10 are distanced from one another by the value P/2 both along the further direction Y and along the direction X.

In a further embodiment of the invention, the elongated elements 5 are shaped in such a way that the length L is substantially the same as the value P.

When it is desired to trim the workpiece 31, first the elongated elements 5 are positioned on the work surface 2 through the threaded elements 7.

Subsequently, the elongated elements 5 are orientated, by rotating them around the rotation axis Z, in such a way that the latter reproduce an edge zone 33 of a shape of a workpiece 31 to be trimmed.

Still subsequently, the threaded elements 7 are clamped in such a way as to lock into the desired positions the elongated elements 5 in order to then proceed with trimming.

Trimming is performed by maintaining a portion of workpiece 31 in contact with guides fixed to the work surface 2, and making edge portions of the shaped workpiece interact with the milling cutters 4.

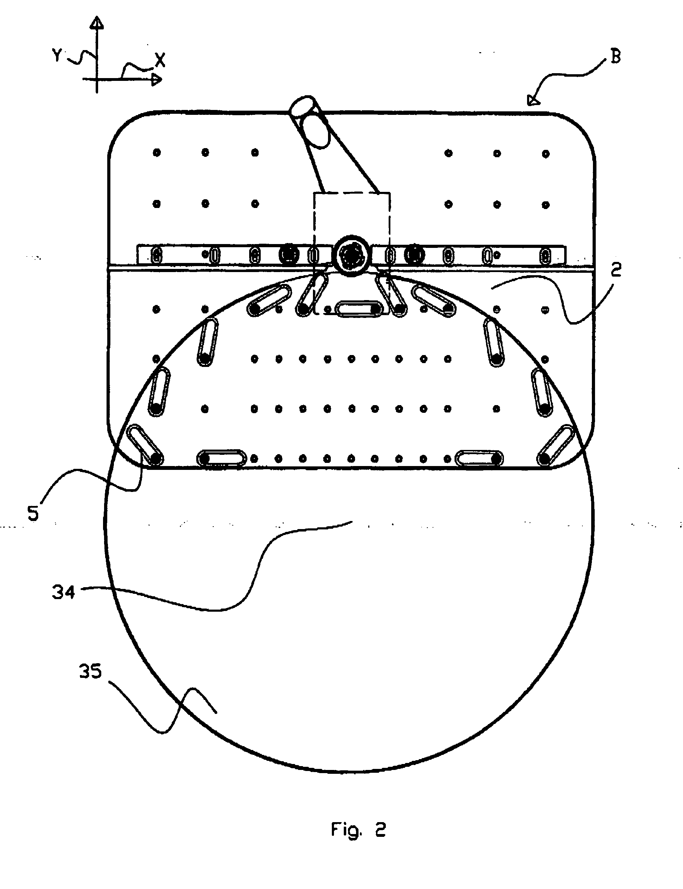

With reference to Figure 2, there is shown a supporting apparatus 1 in a second operating configuration B, in which it is arranged for supporting a further workpiece 34.

In order to move from the first operating configuration A to the second operating configuration B, it is sufficient to unscrew the threaded elements 7, reposition the elongated elements 5, orientate them to reproduce a further edge zone 35 of a further shape of the further workpiece 34 and lock them again on the work surface 2.

It should be noted that owing to the elongated shape of the elongated elements 5 and to the possibility of orientating the latter, it is possible to obtain an effective support with a lower number of elements with respect to the known apparatuses comprising cylinders.

This leads to a reduction of costs and less machine tooling time, with consequent financial benefits.

It should also be noted that the elongated elements 5 have small dimensions and do not therefore require a large space dedicated to the storage thereof.

Further, it should be noted that the elongated elements 5 are simple to make and inexpensive.

## Claims

1. Supporting apparatus arranged for supporting a workpiece (31; 34) to be machined by a machine tool, said supporting apparatus comprising a work surface (2), which comprises a peripheral portion (9) and a central portion (10), and resting means (5) including elongated elements (5) according to a direction (X, Y) substantially parallel to said work surface (2), said elongated elements (5) are each provided with a surface (20) and are rotatable around a respective rotation axis (Z) substantially perpendicular to said surface (20) in such a way that each elongated element (5) is able to assume a plurality of configurations (A; B) on said work surface (2) to approximate a perimeter zone (33; 35) of said workpiece to be machined (31; 34) so as to support, by means of said surfaces (20), said workpiece to be machined (31; 34) during machining thereof, said elongated elements (5) comprising at least a hole (6) obtained in an end (14) of said elongated element (5), said hole (6) being arranged for engaging with fixing means (7) for fixing said elongated element (5) to said work surface (2), and at least a further hole in a further end (15), opposite said end (14), of said elongated element (5), said further hole being arranged for engaging with said fixing means (7) for fixing said elongated element (5) to said work surface (2); said apparatus further comprising positioning means (8), which is positioned according to a preset pattern (32) on said work surface (2), arranged for positioning said elongated elements (5), wherein said preset pattern is defined by a grid (32) comprising a plurality of straight lines that are mutually parallel to a direction (X) of said work surface (2) and to a further direction (Y) of said work surface (2) transverse to said direction (X), wherein in said peripheral portion (9) said positioning means (8) are mutually spaced along said further direction (Y) and along said direction (X) by a distance (P), **characterized in that** in said central portion (10) said positioning means (8) are mutually spaced along said further direction (Y) by said distance (P) and along said direction (X) by a further distance (P/2) or said positioning means (8) are mutually spaced along said further direction (Y) by said further distance (P/2) and along said direction (X) by said distance (P) or by said further distance (P/2) and **in that** said end (14) and said further end (15) have a substantially semicircular shape having a radius (R), said hole (6) and said further hole are distanced from one another by a further distance (I), and said elongated element (5) has a length (L) that is substantially the same as the sum between said further distance (I) and twice said radius (R), said length (L) being substantially the same as said distance (P).

2. Apparatus according to claim 1, wherein said hole (6) extends around said respective rotation axis (Z).

3. Apparatus according to claim 1, or 2, wherein said end (14) and said further end (15) have a substantially convex curved external shape.

4. Apparatus according to any preceding claim, wherein said end (14) and said further end (15) are interconnected by means of a substantially rectilinear portion (13).

5. Apparatus according to any preceding claim, wherein said positioning means comprises hole means (8).

6. Apparatus according to claim 5, wherein said hole means comprises threaded hole means (8).

7. Apparatus according to claim 6, wherein said fixing means comprises threaded elements (7) arranged for coupling in a removable manner with said hole (6) and said further hole and with said threaded hole means (8).

8. Apparatus according to claim 7, wherein said threaded elements (7) comprises countersunk head screw means.

9. Apparatus according to any preceding claim, wherein said machine tool is a trimming machine (3) arranged for trimming an edge (30) of said workpiece to be machined (31; 34).

10. Apparatus according to any one of claims 1 to 8, wherein said machine tool is an edgebanding machine arranged for applying an edge (30) to said workpiece to be machined (2).

## Patentansprüche

1. Stützvorrichtung zum Stützen eines mittels einer Werkzeugmaschine zu bearbeitenden Werkstücks (31; 34), wobei die Stützvorrichtung eine Arbeitsoberfläche (2), die einen Randbereich (9) und einen zentralen Bereich (10) aufweist, und Ruhemittel (5) mit länglichen Elementen (5) in einer Richtung (X, Y) im Wesentlichen parallel zu der Arbeitsoberfläche (2) umfasst, wobei die länglichen Elemente (5) alle mit einer Oberfläche (20) versehen und um eine jeweilige Rotationsachse (Z) drehbar sind, die im Wesentlichen senkrecht zu der Oberfläche (20) ist, derart, dass jedes längliche Element (5) in der Lage ist, eine Vielzahl von Konfigurationen (A; B) auf der Arbeitsoberfläche (2) einzunehmen, um eine Umfangszone (33; 35) auf dem zu bearbeitenden Werkstück (31; 34) zu approximieren, um mit Hilfe dieser Oberflächen (20) das zu bearbeitende Werkstück (31; 34) während dessen Bearbeitung zu stützen, wobei die länglichen Elemente (5) wenigstens ein Loch (6) in einem Ende (14) des länglichen Elements (5) aufweisen, wobei das Loch (6) ausgestaltet ist zum Eingreifen in Befestigungsmittel (7) zum Befestigen des länglichen Elements (5) an der Arbeitsoberfläche (2), und wobei die länglichen Elemente (5) wenigstens ein weiteres Loch in einem weiteren Ende (15) gegenüber dem Ende (14) des länglichen Elements (5) aufweisen, wobei das weitere Loch ausgestaltet ist zum Eingreifen in Befestigungsmittel (7) zum Befestigen des länglichen Elements (5) an die Arbeitsoberfläche (2), wobei die Vorrichtung ferner Positioniermittel (8) aufweist, die gemäß einem vorgegebenen Muster (32) auf der Arbeitsoberfläche (2) positioniert und zum Positionieren der länglichen Elemente (5) ausgestaltet sind, wobei das vorgegebene Muster durch ein Gitter (32) mit einer Vielzahl von geraden Linien, die beiderseits parallel zu einer Richtung (X) der Arbeitsoberfläche (2) und zu einer weiteren Richtung (Y) der Arbeitsoberfläche (2) quer zu der Richtung (X) liegen, definiert ist, wobei in dem Randbereich (9) die Positioniermittel (8) beiderseits entlang der weiteren Richtung (Y) und entlang der Richtung (X) durch einen Abstand (P) beabstandet sind, **dadurch gekennzeichnet, dass** in dem zentralen Bereich (10) die Positioniermittel (8) beiderseits beabstandet sind entlang der weiteren Richtung (Y) durch den Abstand (P) und entlang der Richtung (X) durch einen weiteren Abstand (P/2) oder die Positioniermittel (8) beiderseits beabstandet sind entlang der weiteren Richtung (Y) durch den weiteren Abstand (P/2) und entlang der Richtung (X) durch den Abstand (P) oder durch den weiteren Abstand (P/2), und dass das Ende (14) und das weitere Ende (15) einen im Wesentlichen halbkreisförmigen Umriss aufweisen mit einem Radius (R), dass das Loch (6) und das weitere Loch voneinander durch einen weiteren Abstand (I) beabstandet sind, und dass das längliche Element (5) eine Länge (L) aufweist, die im Wesentlichen gleich der Summe aus dem weiteren Abstand (I) und dem Zweifachen des Radius (R) ist, wobei die Länge (L) im Wesentlichen gleich dem Abstand (P) ist.

2. Vorrichtung gemäß Anspruch 1, wobei das Loch (6) sich um die entsprechende Rotationsachse (Z) erstreckt.

3. Vorrichtung gemäß Anspruch 1 oder 2, wobei das Ende (14) und das weitere Ende (15) einen im Wesentlichen konvex gekrümmten äußeren Umriss aufweisen.

4. Vorrichtung gemäß einem vorstehenden Anspruch, wobei das Ende (14) und das weitere Ende (15) mittels eines im Wesentlichen geradlinigen Abschnitts (13) verbunden sind.

5. Vorrichtung gemäß einem vorstehenden Anspruch, wobei das Positioniermittel Lochmittel (8) aufweist.

6. Vorrichtung gemäß Anspruch 5, wobei das Lochmittel Lochmittel (8) mit Gewinde aufweist.

7. Vorrichtung gemäß Anspruch 6, wobei das Befestigungsmittel Elemente (7) mit Gewinde aufweist, die zum entfernbaren Koppeln mit dem Loch (6) und dem weiteren Loch und mit dem Lochmittel (8) mit Gewinde ausgestaltet sind.

8. Vorrichtung gemäß Anspruch 7, wobei die Elemente (7) mit Gewinde Senkkopfschraubenmittel aufweisen.

9. Vorrichtung gemäß einem vorstehenden Anspruch, wobei die Werkzeugmaschine eine Entgratmaschine (3) zum Entgraten einer Kante (30) des zu bearbeitenden Werkstücks (31; 34) ist.

10. Vorrichtung gemäß einem der Ansprüche 1 bis 8, wobei die Werkzeugmaschine eine Kantenanleimmaschine zum Anbringen einer Kante (30) an das zu bearbeitende Werkstück (2) ist.

## Revendications

1. Dispositif de support agencé pour supporter une pièce (31 ; 34) usinée par une machine-outil, ledit dispositif de support comprenant une surface de travail (2) qui comprend une portion périphérique (9) et une portion centrale (10), et des moyens d'appui (5) comportant des éléments allongés (5) dans une direction (X, Y) sensiblement parallèle à ladite surface de travail (2), lesdits éléments allongés (5) présentant chacun une surface (20) et étant rotatifs autour d'un axe de rotation respectif (Z) sensiblement perpendiculaire à ladite surface (20) de telle manière que chaque élément allongé (5) soit apte à adopter une pluralité de configurations (A ; B) sur ladite surface de travail (2) pour se rapprocher d'une zone périmétrique (33 ; 35) de ladite pièce à usiner (31 ; 34) de manière à supporter, au moyen desdites surfaces (20), ladite pièce à usiner (31 ; 34) pendant son usinage, lesdits éléments allongés (5) comprenant au moins un orifice (6) ménagé dans une extrémité (14) dudit élément allongé (5), ledit orifice (6) étant prévu pour un engagement avec des moyens de fixation (7) afin de fixer ledit élément allongé (5) à ladite surface de travail (2), et au moins un autre orifice dans une autre extrémité (15), opposée à ladite extrémité (14), dudit élément allongé (5), ledit autre orifice étant prévu pour un engagement avec des moyens de fixation (7) afin de fixer ledit élément allongé (5) à ladite surface de travail (2) ; ledit dispositif comprenant de plus des moyens de positionnement (8), qui sont placés selon un motif prédéfini (32) sur ladite surface de travail (2), prévus pour positionner lesdits éléments allongés (5), ledit motif prédéfini étant défini par un quadrillage (32) comprenant une pluralité de lignes droites qui sont mutuellement parallèles à une direction (X) de ladite surface de travail (2) et à une autre direction (Y) de ladite surface de travail (2) transversale à ladite direction (X), dans ladite portion périphérique (9), lesdits moyens de positionnement (8) étant espacés les uns des autres le long de ladite autre direction (Y) et le long de ladite direction (X) d'une distance (P), ***caractérisé en ce que**,* dans ladite portion centrale (10), lesdits moyens de positionnement (8) sont espacés les uns des autres, le long de ladite autre direction (Y), de ladite distance (P) et, le long de ladite direction (X), d'une autre distance (P/2), ou lesdits moyens de positionnement (8) sont espacés les uns des autres, le long de ladite autre direction (Y), de ladite autre distance (P/2), et, le long de ladite direction (X), de ladite distance (P) ou de ladite autre distance (P/2), *et **en ce que*** ladite extrémité (14) et ladite autre extrémité (15) ont une forme sensiblement hémicirculaire de rayon (R), ledit orifice (6) et ledit autre orifice sont distants l'un de l'autre d'une autre distance (I), et ledit élément allongé (5) a une longueur (L) qui est sensiblement la même que la somme de ladite autre distance (I) et de deux fois ledit rayon (R), ladite longueur (L) étant sensiblement la même que ladite distance (P).

2. Dispositif selon la revendication 1, dans lequel ledit orifice (6) s'étend autour dudit axe de rotation respectif (Z).

3. Dispositif selon la revendication 1 ou 2, dans lequel ladite extrémité (14) et ladite autre extrémité (15) ont une forme extérieure incurvée sensiblement convexe.

4. Dispositif selon l'une quelconque des revendications précédentes, dans lequel ladite extrémité (14) et ladite autre extrémité (15) sont interconnectées au moyen d'une portion (13) sensiblement rectiligne.

5. Dispositif selon l'une quelconque des revendications précédentes, dans lequel lesdits moyens de positionnement comprennent des moyens d'orifices (8).

6. Dispositif selon la revendication 5, dans lequel lesdits moyens d'orifices comprennent des moyens d'orifices filetés (8).

7. Dispositif selon la revendication 6, dans lequel lesdits moyens de fixation comprennent des éléments filetés (7) prévus pour un couplage amovible avec ledit orifice (6) et ledit autre orifice et avec lesdits moyens d'orifices filetés (8).

8. Dispositif selon la revendication 7, dans lequel lesdits éléments filetés (7) comprennent des moyens de vis à tête fraisée.

9. Dispositif selon l'une quelconque des revendications précédentes, dans lequel ladite machine-outil est une dresseuse (3) prévue pour le dressage d'un chant (30) de ladite pièce à usiner (31 ; 34).

10. Dispositif selon l'une quelconque des revendications 1 à 8, dans lequel ladite machine-outil est une machine de placage de chants prévue pour appliquer un chant (30) sur ladite pièce à usiner (2).
